# EUROPÄISCHE PATENTSCHRIFT

(11) **EP 3 557 073 B1**
(45) Veröffentlichungstag und Bekanntmachung des Hinweises auf die Patenterteilung: **27.05.2026**
(21) Anmeldenummer: 19161444.5
(22) Anmeldetag: 07.03.2019
(51) Int. Cl.: F04D 29/32, G01J 5/00, G01J 5/04, F04D 19/04, F04D 27/00

(54) **VAKUUMPUMPE**
VACUUM PUMP
POMPE À VIDE

(43) Veröffentlichungstag der Anmeldung: 23.10.2019
(73) Patentinhaber: PFEIFFER VACUUM GMBH, 35614 Asslar (DE)
(72) Erfinder: Wirth, Adrian, 35619 Braunfels (DE); Schnarr, Johannes, 35625 Rechtenbach (DE); Wissner, Jürgen, 35466 Rabenau (DE); Kahl, Joachim, 35584 Wetzlar/N. (DE)
(74) Vertreter: Manitz Finsterwald Patent- und Rechtsanwaltspartnerschaft mbB

(56) Entgegenhaltungen:
- WO-A1-2018/046913
- DE-A1- 102013 207 059
- JP-A- 2004 116 319

## Beschreibung

Die Erfindung betrifft eine Vakuumpumpe, insbesondere Turbomolekularpumpe, mit zumindest einer Pumpstufe, die zumindest einen Rotor umfasst.

Derartige Vakuumpumpen finden in vielen Bereichen der Industrie oder der Forschung Anwendung. Dabei ist es von großer Bedeutung, deren Betrieb zuverlässig überwachen zu können, beispielsweise um Lastzustände zu erfassen und/oder sich anbahnende Funktionsstörungen frühzeitig erkennen zu können.

Bei Vakuumpumpen der eingangs genannten Art dreht der Rotor häufig mit hohen Drehzahlen. Der Zustand des Rotors ist daher von besonderer Bedeutung für die Funktionsfähigkeit der Pumpe.

Die WO 2018/046913 A1 offenbart eine Vakuumpumpe mit den Merkmalen des Oberbegriffs des Anspruchs 1.

Es ist eine Aufgabe der Erfindung, eine Pumpe zu schaffen, mit der sich ein Betriebsparameter des Rotors auf einfache Weise zuverlässig erfassen lässt, unter anderem um Rückschlüsse auf den Betriebszustand der Pumpe ziehen zu können.

Erfindungsgemäß ist zumindest eine Sensoreinrichtung vorgesehen, mit der eine Temperatur zumindest eines Abschnitts des Rotors durch Messung der von dem Abschnitt abgegebenen Wärmestrahlung berührungslos bestimmbar ist, wobei der Abschnitt des Rotors oberflächenbehandelt ist.

Das Material aus dem Rotoren, deren Beschichtung und/oder Bauteile, die mit dem Rotor verbunden sind, üblicherweise bestehen, weist in der Regel einen geringen Emissionsgrad im Spektralbereich von Wärmestrahlung auf. Als Emissionsgrad ist in diesem Zusammenhang das Verhältnis der Strahlung, die der Rotor abgibt, zu der, die ein idealer Wärmestrahler (schwarzer Körper) abgeben würde, zu verstehen. Der Emissionsgrad eines idealen Wärmestrahlers beträgt 1.

Die Temperaturbestimmung eines Körpers mit einem geringen Emissionsgrad mittels Messung der abgegebenen Wärmestrahlung ist jedoch vergleichsweise unzuverlässig.

Erfindungsgemäß wurde erkannt, dass die Zuverlässigkeit der berührungslosen Temperaturmessung über eine Messung der Wärmestrahlung auf einfache Weise verbessert werden kann, wenn der Emissionsgrad zumindest eines Abschnitts des Rotors erhöht wird. Diese lokale Emissionsgraderhöhung erfolgt durch eine geeignete Oberflächenbehandlung. Die von dem oberflächenbehandelten Abschnitt ausgesandte Wärmestrahlung ist auch deshalb einfacher und zuverlässiger messbar, weil die Menge der ausgesandten Strahlung oder Strahlungsdichte deutlich größer ist als bei einem nicht behandelten Oberflächenabschnitt. Dies wiederum ermöglicht die Verwendung einfacher Sensoren, falls Kostenaspekte im Vordergrund stehen. Umgekehrt wird die Temperaturmessung bei der Verwendung herkömmlicher Sensoren deutlich genauer und ist besser reproduzierbar.

Um die durch die Oberflächenbehandlung des Abschnitts erzeugte Unwucht des Rotors zu minimieren, kann vorgesehen sein, dass dieser sich in Umfangsrichtung des Rotors im Wesentlichen hinsichtlich seiner Eigenschaften gleichmäßig um die Drehachse des Roboters erstreckt oder dass mehrere Abschnitte mit vergleichbaren Eigenschaften in Umfangsrichtung gleichmäßig verteilt angeordnet sind.

Weitere Ausführungsformen der Erfindung sind in der Beschreibung, den Ansprüchen und den beigefügten Zeichnungen angegeben.

Gemäß einer Ausführungsform umfasst die Sensoreinrichtung einen Infrarotsensor.

Erfindungsgemäß ist der Abschnitt des Rotors aufgeraut oder strukturiert, um dadurch den Emissionsgrad des Abschnitts zu erhöhen. Ein möglicher Mechanismus, der für die verbesserten Emissionseigenschaften verantwortlich sein könnte, ist eine verstärkte diffuse Reflexion im elektromagnetischen Infrarotbereich, insbesondere im nahen bis mittleren Infrarotbereich, beispielsweise in Wellenlängenbereichen von etwa 8 bis 15 µm. Der Abschnitt des Rotors ist erfindungsgemäß derart aufgeraut oder strukturiert, dass er eine mittlere Rauheit Rₐ von 5 bis 25 µm und/oder eine gemittelte Rautiefe R_{z} von 40 bis 100 µm aufweist und/oder dass der Abschnitt Oberflächenstrukturen im Bereich 15 bis 50 µm aufweist.

Erfindungsgemäß besteht der oberflächenbehandelte Abschnitt im Wesentlichen aus einem Material des Rotors im Bereich des Abschnitts. Die behandelte Fläche behält dann im Wesentlichen die chemische und/oder mechanische Stabilität des Ausgangswerkstoffs, z.B. Aluminium. Bei speziellen Anwendungen der Pumpe, insbesondere bei Anwendungen in korrosiven Umgebungen, wird der Rotor beschichtet, beispielsweise mit Nickel. Aus Kostengründen wird die Beschichtung großflächig aufgebracht, sodass auch Bereiche des Rotors beschichtet sind, die zur Temperaturbestimmung dienen. Diese Beschichtung ist in diesem Fall als Teil des Materials des Rotors zu verstehen.

Da der Emissionsgrad solch einer Beschichtung in der Regel niedrig ist, erweist sich eine geeignete Oberflächenbehandlung zur Erhöhung des Emissionsgrads als besonders effizient. Die schützende Wirkung der Beschichtung wird durch die Oberflächenbehandlung nicht wesentlich beeinträchtigt, wenn ein entsprechendes Behandlungsverfahren zum Einsatz gelangt.

Grundsätzlich kann eine Aufrauhung oder Strukturierung des Abschnitts ein regelmäßiges Muster umfassen, beispielsweise eine Schraffur. Erfindungsgemäß ist jedoch eine gleichmäßige Aufrauhung oder Strukturierung vorgesehen.

Es ist aber auch möglich, dass der genannte Abschnitt des Rotors eine Beschichtung aufweist, d. h. die Oberflächenbehandlung umfasst eine Beschichtung des Abschnitts (ggf. zusätzlich zu einer Beschichtung des Rotors, die vor der Oberflächenbehandlung des Abschnitts aufgebracht wurde, wie etwa die vorstehend beispielhaft beschriebene Nickelbschichtung). Grundsätzlich ist denkbar, dass hierfür eine dunkle Farbe oder andere geeignete Substanzen (z.B. schwarzer Nickel, Oxidschichten wie etwa Kepla oder Eloxat) auf den Abschnitt aufgebracht werden, um den Emissionsgrad hier lokal zu erhöhen. Die Beschichtung kann aber auch zusätzlich zu einer Aufrauhung und/oder Strukturierung des Abschnitts vorgesehen sein, z.B. um diesen zu schützen.

Der oberflächenbehandelte Abschnitt kann an einer Welle des Rotors angeordnet sein. Es ist aber auch möglich, dass der oberflächenbehandelte Abschnitt an einem mit einer Welle des Rotors verbundenen Bauteil angeordnet ist. Dieses Bauteil kann ein für im Grunde andere Zwecke vorgesehenes (Funktions)Bauteil sein. Es ist jedoch auch denkbar, ein - direkt oder indirekt mit dem Rotor verbundenes - Bauteil vorzusehen, das spezifisch zur Messung der abgegebenen Wärmestrahlung vorgesehen ist, beispielsweise eine Hülse aus geeignetem Material bzw. mit geeigneten (Oberflächen)Eigenschafen, die auf den Rotor aufgebracht wird (z.B. eine Hülse aus eloxiertem Aluminium, carbon- oder glasfaserverstärktem Kunststoff oder aus einem anderen geeigneten Material).

Der oberflächenbehandelte Abschnitt kann eine Ringfläche bilden. Dadurch ist es möglich, bei einer Drehung des Rotors kontinuierlich dessen Temperatur zu erfassen. Der oberflächenbehandelte Abschnitt kann zumindest abschnittsweise gekrümmt krümmt und/oder eben ausgestaltet sein, insbesondere ist er kontinuierlich gekrümmt oder im Wesentlichen vollständig eben.

Gemäß einer weiteren Ausführungsform erstreckt sich der oberflächenbehandelte Abschnitt in einer Ebene, die im Wesentlichen senkrecht zu einer Drehachse des Rotors angeordnet ist.

Insbesondere ist der oberflächenbehandelte Abschnitt in einem Bereich des Rotors angeordnet, der einem Vorvakuumbereich oder Auslassbereich der Pumpstufe oder der Pumpe zugeordnet ist. Eine eventuell leicht erhöhte Ausgangsrate des oberflächenbehandelten Abschnitts im Vergleich zu einer glatten Oberfläche ist dann nicht nachteilig und daher in der Praxis meist unbedenklich.

Die vorliegende Erfindung betrifft ferner ein Verfahren zur Herstellung einer Vakuumpumpe, insbesondere gemäß einer der vorstehend beschriebenen Ausführungsformen, wobei die Vakuumpumpe zumindest eine Pumpstufe aufweist, die zumindest einen Rotor umfasst, wobei zumindest eine Sensoreinrichtung vorgesehen ist, mit der eine Temperatur zumindest eines Abschnitts des Rotors durch Messung der von dem Abschnitt abgegebenen Wärmestrahlung berührungslos bestimmbar ist, wobei der Abschnitt des Rotors oberflächenbehandelt wird.

Erfindungsgemäß wird bei der Oberflächenbehandlung des Abschnitts des Rotors dieser aufgeraut.

Bei der Herstellung des Abschnitts wird ein Laserstrukturierungsprozess verwendet.

Bei dem Laserstrukturierungsprozess kann beispielsweise ein für Beschriftungszwecke verwendeter Laser eingesetzt werden. Die Strukturierung des Abschnitts des Rotors kann dann gleich im Zuge einer ohnehin vorgesehenen Markierung des Rotors erfolgen. Zur Beschleunigung des Strukturierungsprozesses kann dieser jedoch auch mit einer stärkeren Strahlungsquelle erfolgen. Grundsätzlich relevante Parameter bei dem Laserstrukturierungsprozess sind u.a. die Leistung des verwendeten Lasers, die Repetitionsrate, die Vorschubgeschwindigkeit und der Linienabstand.

Durch den Laserstrukturierungsprozess konnten Emissionsgrade des Abschnitts erzeugt werden, die im Bereich von bis zu 0,9 liegen. Vergleicht man diesen Wert mit dem Emissionsgrad von gedrehtem Aluminium (ein typisches Rotormaterial), der in der Größenordnung von etwa 0,02 liegt, so wird deutlich, dass die Temperaturmessung signifikant verbessert werden kann. Der oberflächenbehandelte Abschnitt emittiert nämlich bei gleicher Temperatur erheblich mehr Wärmestrahlung als ein nicht behandelter Abschnitt des Rotors. Dies bedeutet u.a. auch, dass Messschwankungen weniger ins Gewicht fallen.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: einen vergrößerten Ausschnitt der Fig. 4 mit einer beispielhaften Anordnung des oberflächenbehandelten Bereichs und der Sensoreinrichtung und
- Fig. 7: eine Ausführungsform einer Splitflow-Pumpe mit weiteren beispielhaften Anordnungen des oberflächenbehandelten Bereichs bzw. entsprechender Sensoreinrichtungen.

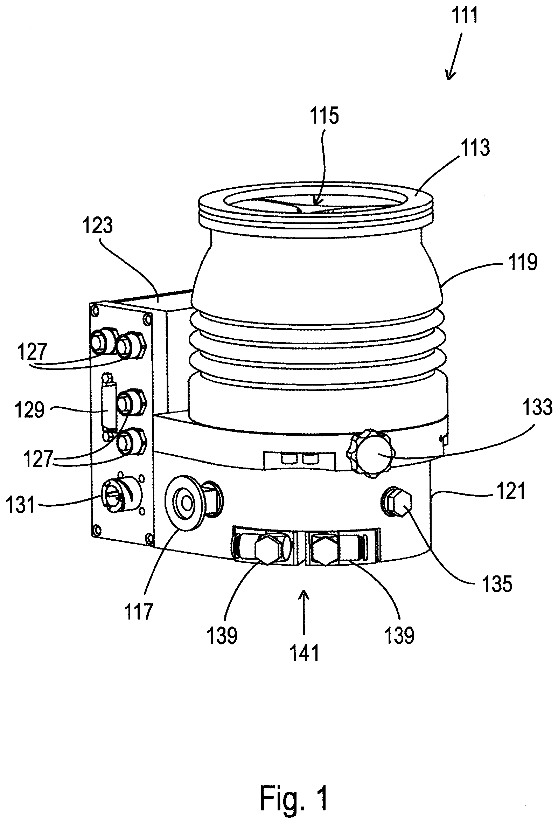

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

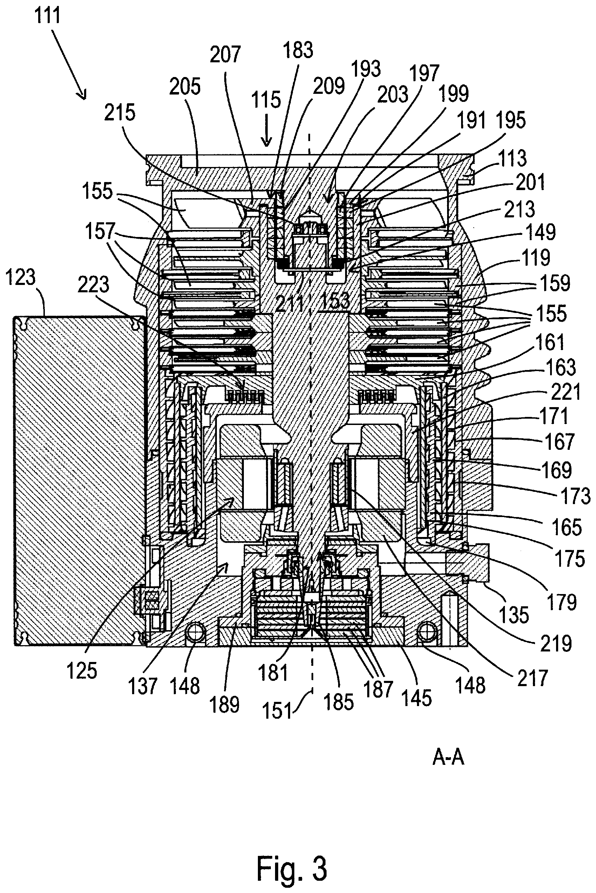

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

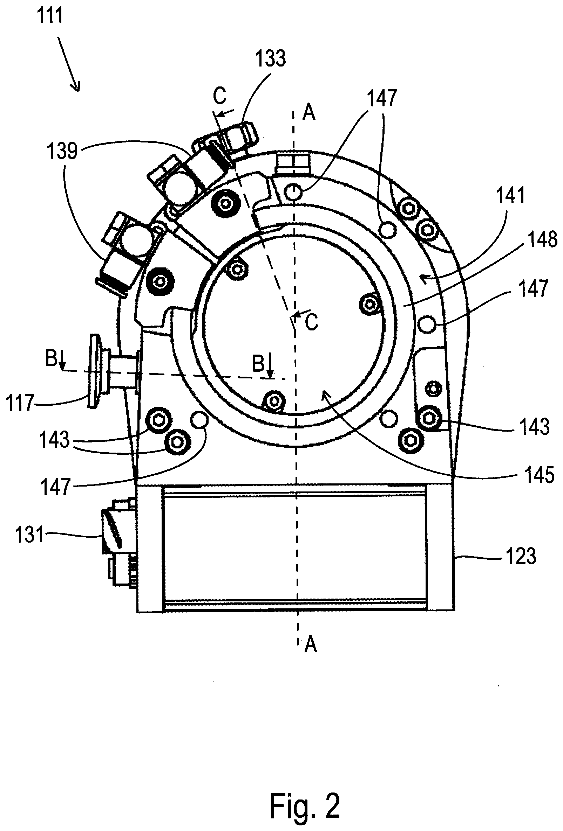

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

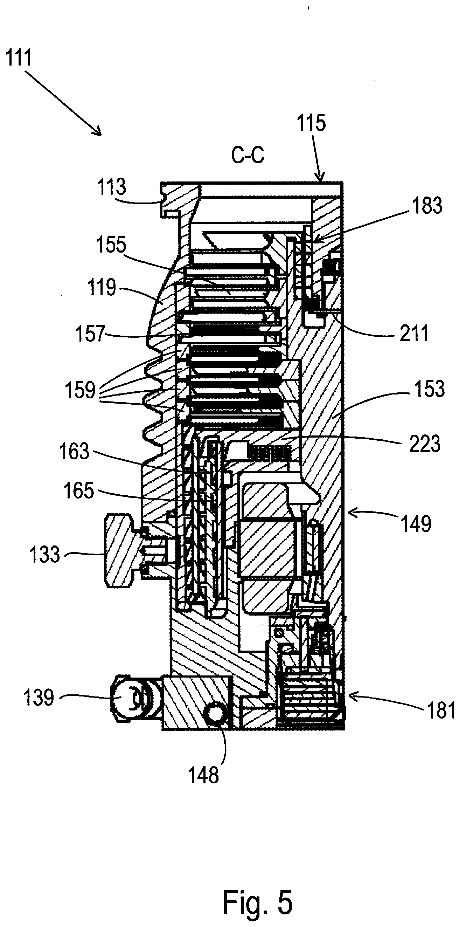

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

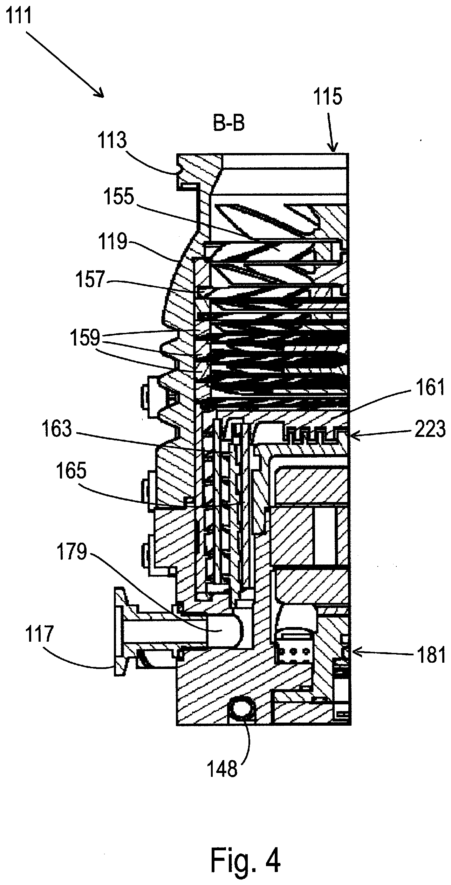

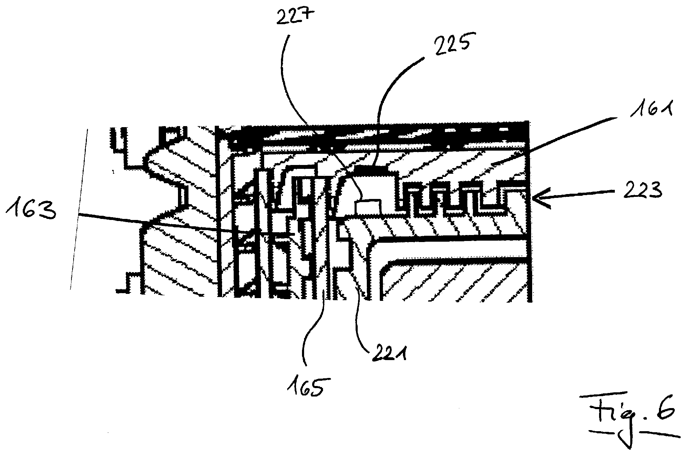

Fig. 6 zeigt einen vergrößerten Ausschnitt der Fig. 4. Er umfasst einen Bereich in der Nähe der Labyrinthdichtung 223. Die Rotornabe 161 weist zu Temperaturmessungszwecken einen Oberflächenabschnitt 225 auf, der eine Oberflächenbehandlung erfahren hat, um hier lokal eine Erhöhung des Emissionsgrads zu bewirken. In dem vorliegenden Ausführungsbeispiel ist er in radialer Richtung zwischen der Labyrinthdichtung 223 und der Holweck-Rotorhülse 165 angeordnet.

Der Abschnitt 225 kann mit zumindest einem der vorstehenden beschriebenen Verfahren behandelt worden sein und/oder eine Beschichtung aufweisen. Die Beschichtung - falls vorgesehen - kann selbst eine Emissionsgrad erhöhende Wirkung haben und/oder eine Aufrauhung oder Strukturierung des Abschnitts 225 schützen.

Durch eine Messung der von dem Abschnitt 225 abgegebenen Wärmestrahlung kann auf die Temperatur der Narbe 161 und damit auf die Temperatur des Rotors 149 geschlossen werden. Dabei ist es von Vorteil, wenn die genannten Komponenten thermisch gut leitend miteinander gekoppelt sind.

Die Messung der Wärmestrahlung erfolgte durch einen Infrarotsensor 227, der an der kappenartigen Wandung 221 angeordnet ist.

Der Abschnitt 225 ist ein ebener ringförmiger Oberflächenbereich, der sich in einer Ebene erstreckt, die im Wesentlichen senkrecht zu einer Rotationsachse 151 des Rotors 149 angeordnet ist. Bei einer Drehung des Roboters 149 empfängt der mit der Wandung 221 statisch angeordnete Sensor 227 ständig einen Teil der von dem Abschnitt 225 abgegebenen Wärmestrahlung, sodass eine kontinuierliche Temperaturmessung möglich ist. In einem thermischen Gleichgewichtszustand sollte das gemessene Signal nur geringe Schwankungen aufweisen.

Zur Erhöhung der Messgenauigkeit können mehrere, in Umfangsrichtung verteilt angeordnete Sensoren 227 vorgesehen sein. Alternativ oder zusätzlich kann der Abschnitt 225 separate Teilabschnitte umfassen, die insbesondere in Umfangsrichtung gleichmäßig verteilt sind, um die durch sie erzeugte Unwucht zu minimieren.

Der Abschnitt 225 ist in Pumprichtung stromabwärts der durch die Rotorscheiben 155 und Statorscheiben 157 gebildeten Pumpstufe angeordnet, um die Auswirkungen etwaiger Ausgasungen, die aufgrund der Oberflächenbehandlung auftreten könnten, zu minimieren.

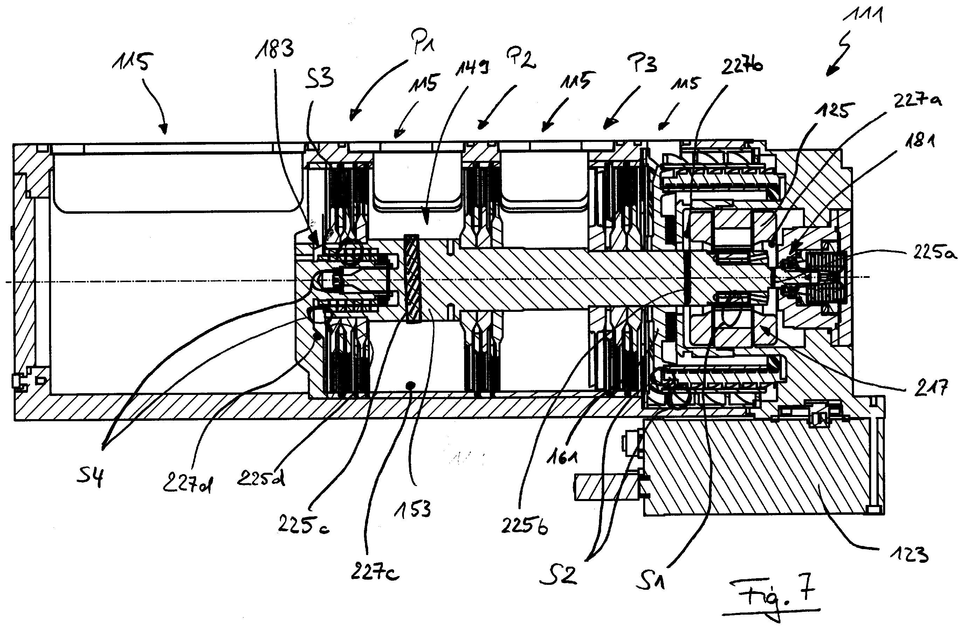

Fig. 7 zeigt eine Turbomolekularpumpe 111, die als Splitflow-Pumpe ausgebildet ist. Anhand dieser Pumpe werden alternative oder zusätzliche räumliche Anordnungen des Abschnitts 225 bzw. entsprechender Sensoren 227 beispielhaft dargestellt. Grundsätzlich sind die gezeigten räumlichen Anordnungen aber auf die verschiedensten Pumpentypen anwendbar.

Eine Rotorwelle 153 des Rotors 149 trägt drei Gruppen von Rotorscheiben und Statorscheiben, die drei Pumpstufen P1, P2, P3 bilden. Um Rückschlüsse auf die Temperatur des Rotors 149 ziehen zu können, kann an der Rotorwelle 153 in der Nähe eines Wälzlagers 181 ein ringförmiger oberflächenbehandelter Abschnitt 225a vorgesehen sein. Die von ihm abgegebene Wärmestrahlung wird durch einen Sensor 227a erfasst.

Eine weitere mögliche Anordnung sieht einen Sensor vor, der in einen Motorstator 217 eingebettet ist. Er misst die Strahlung, eines oberflächenbehandelten Abschnitts, der an einem entsprechenden Teil der Rotorwelle 153 angeordnet ist. Beispielsweise ist dieser Abschnitt im Bereich einer Permanentmagnetanordnung vorgesehen, die den Anker des Motors bildet. Der Sensor und der zugeordnete oberflächenbehandelte Abschnitt können beispielsweise in dem mit S1 grob gekennzeichneten Messbereich angeordnet sein.

Noch eine weitere mögliche Anordnung umfasst einen Sensor 227b, der einem ringförmigen oberflächenbehandelten Abschnitt 225b zugeordnet ist. Diese Anordnung liegt zwischen der Pumpstufe P3 und dem Motorstator 217.

Auch im Bereich der Holweck-Stufe kann eine Paarung eines Infrarotsensors (an einem statischen Bauteil der Stufe) und eines ihm zugeordneten oberflächenbehandelten Abschnitts (an einem dem Rotor 149 zugeordneten Bauteil der Stufe) vorgesehen sein. Die Messung kann in radialer und/oder axialer Richtung erfolgen (siehe beispielhaft Messbereiche S2).

Zwischen den Pumpstufen P1, P2, P3 kann ebenfalls eine Temperaturmessung vorgenommen werden. Beispielhaft ist eine Hülse 225c gezeigt, die auf die Welle 153 aufgesteckt und an dieser befestigt ist (nicht Teil der Erfindung). Funktionell entspricht die Hülse 225c den Abschnitten 225, 225a, 225b. Ihr ist ein Sensor 227c zugeordnet.

Auch die Rotorscheiben 155 können als Basis für einen oberflächenbehandelten Abschnitt dienen (siehe Abschnitt 225d), denen ein geeignet angeordneter Sensor 227d zugeordnet ist.

Analoges gilt für den Bereich eines Permanentmagnetlagers 183. An dem statischen Teil des Lagers 183 kann ein Sensor vorgesehen sein, der in radialer Richtung "blickt" und dem ein oberflächenbehandelten Abschnitt zugeordnet ist, der sich ringartig in Umfangsrichtung an einem rotorseitigen Teil des Lager 183 erstreckt (Messung in radialer Richtung). Beispielhaft ist ein Messbereich S3 angegeben.

Es aber auch möglich, an einem stirnseitigen Abschnitt der Welle 153 einen oberflächenbehandelten Abschnitt auszubilden, dessen ausgesandte Wärmestrahlung von einem entsprechend angeordneten Sensor erfasst wird (siehe beispielhafte Messbereiche S4, Messung in axialer Richtung).

Aus den vorstehenden Erläuterungen wird ersichtlich, dass das erfindungsgemäße Konzept in den unterschiedlichsten Pumpentypen an den verschiedensten Stellen umgesetzt werden kann. Bei der Wahl der räumlichen Anordnung des oberflächenbehandelten Abschnitts sowie des entsprechenden Sensors können pumpenspezifische Besonderheiten sowie spezielle Anforderungen, die an die jeweilige Pumpe gestellt werden, berücksichtigt werden.

Ganz grundsätzlich sei erwähnt, dass oberflächenbehandelte Abschnitte der vorstehend beschriebenen Art auch zur verbesserten Wärmeabgabe vorgesehen sein können. D. h. ihnen ist nicht unbedingt eine Sensoreinrichtung zugeordnet, mit denen die von Ihnen abgegebene Wärmestrahlung erfasst wird, sondern sie dienen lediglich zur Optimierung des Wärmeflusses im Inneren der Pumpe. Solche oberflächenbehandelte Abschnitte können sowohl an rotierenden als auch an statischen Bauteilen der Pumpe vorgesehen sein.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225, 225a, 225b, 225c, 225d: oberflächenbehandelter Abschnitt
- 227, 227a, 227b, 227c, 227d: Sensor
- P1, P2, P3: Pumpstufe
- S1, S2, S3, S4: Messbereich

## Patentansprüche

1. Vakuumpumpe, insbesondere Turbomolekularpumpe, mit zumindest einer Pumpstufe, die zumindest einen Rotor (149) umfasst, wobei zumindest eine Sensoreinrichtung (227, 227a, 227b, 227d) vorgesehen ist, mit der eine Temperatur zumindest eines Abschnitts des Rotors durch Messung der von dem Abschnitt abgegebenen Wärmestrahlung berührungslos bestimmbar ist, wobei der Abschnitt (225, 225a, 225b, 225d) des Rotors oberflächenbehandelt ist und der oberflächenbehandelte Abschnitt im Wesentlichen aus einem Material des Rotors im Bereich des Abschnitts besteht,
**dadurch gekennzeichnet, dass**
der Abschnitt des Rotors mittels eines Laserstrukturierungsprozesses aufgeraut oder strukturiert ist, so dass er eine mittlere Rauheit Rₐ von 5 bis 25 µm und/oder eine gemittelte Rautiefe R_{z} von 40 bis 100 µm aufweist und/oder dass der Abschnitt Oberflächenstrukturen im Bereich 15 bis 50 µm aufweist.

2. Vakuumpumpe nach Anspruch 1,
wobei die Sensoreinrichtung einen Infrarotsensor umfasst.

3. Vakuumpumpe nach einem der vorstehenden Ansprüche,
wobei der oberflächenbehandelte Abschnitt an einer Welle des Rotors angeordnet ist.

4. Vakuumpumpe nach einem der vorstehenden Ansprüche,
wobei der oberflächenbehandelte Abschnitt an einem mit einer Welle (153) des Rotors verbundenen Bauteil angeordnet ist.

5. Vakuumpumpe nach einem der vorstehenden Ansprüche,
wobei der oberflächenbehandelte Abschnitt eine Ringfläche bildet.

6. Vakuumpumpe nach einem der vorstehenden Ansprüche,
wobei der oberflächenbehandelte Abschnitt zumindest abschnittsweise gekrümmt und/oder eben ausgestaltet ist, insbesondere kontinuierlich gekrümmt oder im Wesentlichen vollständig eben.

7. Vakuumpumpe nach einem der vorstehenden Ansprüche,
wobei sich der oberflächenbehandelte Abschnitt in einer Ebene erstreckt, die im Wesentlichen senkrecht zu einer Drehachse des Rotors angeordnet ist.

8. Vakuumpumpe nach einem der vorstehenden Ansprüche,
wobei der oberflächenbehandelte Abschnitt in einem Bereich des Rotors angeordnet ist, der einem Vorvakuumbereich oder Auslassbereich der Pumpstufe oder der Pumpe zugeordnet ist.

9. Verfahren zur Herstellung einer Vakuumpumpe, insbesondere gemäß einem der vorstehenden Ansprüche, wobei die Vakuumpumpe zumindest eine Pumpstufe aufweist, die zumindest einen Rotor (149) umfasst, wobei zumindest eine Sensoreinrichtung (227, 227a, 227b, 227d) vorgesehen ist, mit der eine Temperatur zumindest eines Abschnitts (225, 225a, 225b, 225d) des Rotors durch Messung der von dem Abschnitt abgegebenen Wärmestrahlung berührungslos bestimmbar ist, wobei der Abschnitt des Rotors oberflächenbehandelt wird und der oberflächenbehandelte Abschnitt im Wesentlichen aus einem Material des Rotors im Bereich des Abschnitts besteht,
**dadurch gekennzeichnet, dass**
der Abschnitt des Rotors bei dessen Oberflächenbehandlung mittels eines Laserstrukturierungsprozesses aufgeraut wird, so dass er eine mittlere Rauheit Rₐ von 5 bis 25 µm und/oder eine gemittelte Rautiefe R_{z} von 40 bis 100 µm aufweist und/oder dass der Abschnitt Oberflächenstrukturen im Bereich 15 bis 50 µm aufweist.

## Claims

1. A vacuum pump, in particular a turbomolecular pump, comprising at least one pump stage which comprises at least one rotor (149), wherein at least one sensor device (227, 227a, 227b, 227d) is provided by which a temperature of at least one section of the rotor can be determined in a contactless manner by measuring the thermal radiation emitted by the section, wherein the section (225, 225a, 225b, 225d) of the rotor is surface treated and the surface-treated section substantially consists of a material of the rotor in the region of the section,
**characterized in that**
the section of the rotor is roughened or structured by means of a laser structuring process so that it has an average roughness Rₐ of 5 to 25 µm and/or an average roughness depth R_{z} of 40 to 100 µm, and/or **in that** the section has surface structures in the range of 15 to 50 µm.

2. A vacuum pump according to claim 1,
wherein the sensor device comprises an infrared sensor.

3. A vacuum pump according to one of the preceding claims,
wherein the surface-treated section is arranged at a shaft of the rotor.

4. A vacuum pump according to any one of the preceding claims,
wherein the surface-treated section is arranged at a component which is connected to a shaft (153) of the rotor.

5. A vacuum pump according to any one of the preceding claims, wherein the surface-treated section forms a ring surface.

6. A vacuum pump according to any one of the preceding claims,
wherein the surface-treated section is at least sectionally designed as curved and/or as planar, in particular is continuously curved or substantially completely planar.

7. A vacuum pump according to any one of the preceding claims,
wherein the surface-treated section extends in a plane which is arranged substantially perpendicular to an axis of rotation of the rotor.

8. A vacuum pump according to any one of the preceding claims,
wherein the surface-treated section is arranged in a region of the rotor that corresponds to a pre-vacuum region or outlet region of the pump stage or the pump.

9. A method for manufacturing a vacuum pump, in particular according to any one of the preceding claims, wherein the vacuum pump comprises at least one pump stage which comprises at least one rotor (149), wherein at least one sensor device (227, 227a, 227b, 227d) is provided by which a temperature of at least one section of the rotor can be determined in a contactless manner by measuring the thermal radiation emitted by the section, wherein the section (225, 225a, 225b, 225d) of the rotor is surface treated and the surface-treated section substantially consists of a material of the rotor in the region of the section,
**characterized in that**,
during the surface treatment of the section of the rotor, said section is roughened by means of a laser structuring process so that it has an average roughness Rₐ of 5 to 25 µm and/or an average roughness depth R_{z} of 40 to 100 µm, and/or **in that** the section has surface structures in the range of 15 to 50 µm.

## Revendications

1. Pompe à vide, en particulier pompe turbomoléculaire, comportant au moins un étage de pompage pourvu d'au moins un rotor (149),
dans laquelle est prévu au moins un dispositif capteur (227, 227a, 227b, 227d) qui permet de déterminer sans contact physique la température d'au moins une partie du rotor en mesurant le rayonnement thermique émis par cette partie, ladite partie (225, 225a, 225b, 225d) du rotor étant traitée en surface, et la partie traitée en surface étant constituée sensiblement en un matériau du rotor au niveau de ladite partie,
**caractérisée en ce que**
ladite partie du rotor est rendue rugueuse ou structurée au moyen d'un processus de structuration au laser, de manière à présenter une rugosité moyenne Rₐ de 5 à 25 µm et/ou une profondeur de rugosité moyenne R_{z} de 40 à 100 µm, et/ou de telle sorte que ladite partie présente des structures de surface dans la plage de 15 à 50 µm.

2. Pompe à vide selon la revendication 1,
dans laquelle le dispositif capteur comprend un capteur infrarouge.

3. Pompe à vide selon l'une des revendications précédentes,
dans laquelle la partie traitée en surface est disposée sur un arbre du rotor.

4. Pompe à vide selon l'une des revendications précédentes,
dans laquelle la partie traitée en surface est disposée sur un composant relié à un arbre (153) du rotor.

5. Pompe à vide selon l'une des revendications précédentes,
dans laquelle la partie traitée en surface constitue une surface annulaire.

6. Pompe à vide selon l'une des revendications précédentes,
dans laquelle la partie traitée en surface est au moins localement courbée et/ou plane, en particulier courbée de manière continue ou plane sensiblement sur sa totalité.

7. Pompe à vide selon l'une des revendications précédentes,
dans laquelle la partie traitée en surface s'étend dans un plan qui est disposé sensiblement perpendiculairement à un axe de rotation du rotor.

8. Pompe à vide selon l'une des revendications précédentes,
dans laquelle la partie traitée en surface est disposée dans une zone du rotor qui est associée à une zone de vide préliminaire ou à une zone de sortie de l'étage de pompage ou de la pompe.

9. Procédé de fabrication d'une pompe à vide, en particulier selon l'une des revendications précédentes, la pompe à vide comportant au moins un étage de pompage pourvu d'au moins un rotor (149), au moins un dispositif capteur (227, 227a, 227b, 227d) étant prévu qui permet de déterminer sans contact physique la température d'au moins une partie (225, 225a, 225b, 225d) du rotor en mesurant le rayonnement thermique émis par cette partie, ladite partie du rotor étant traitée en surface, et la partie traitée en surface étant constituée sensiblement en un matériau du rotor au niveau de ladite partie,
**caractérisé en ce que**
la partie du rotor est rendue rugueuse lors de son traitement de surface au moyen d'un processus de structuration au laser, de manière à présenter une rugosité moyenne Rₐ de 5 à 25 µm et/ou une profondeur de rugosité moyenne R_{z} de 40 à 100 µm, et/ou de telle sorte que ladite partie présente des structures de surface dans la plage de 15 à 50 µm.
